(19) Europäisches Patentamt
European Patent Office
Office européen des brevets

(11) **EP 0 724 748 B1**

(12) **EUROPÄISCHE PATENTSCHRIFT**

(45) Veröffentlichungstag und Bekanntmachung des Hinweises auf die Patenterteilung:
**13.01.1999 Patentblatt 1999/02**

(51) Int Cl.[6]: **G05B 11/42**, G05B 13/02

(21) Anmeldenummer: **94928760.1**

(22) Anmeldetag: **10.10.1994**

(86) Internationale Anmeldenummer:
**PCT/DE94/01187**

(87) Internationale Veröffentlichungsnummer:
**WO 95/11478 (27.04.1995 Gazette 1995/18)**

(54) **REGELEINRICHTUNG**

CONTROL DEVICE

DISPOSITIF DE REGULATION

(84) Benannte Vertragsstaaten:
**AT BE CH DE ES FR GB IT LI NL PT SE**

(30) Priorität: **18.10.1993 DE 9315871 U**

(43) Veröffentlichungstag der Anmeldung:
**07.08.1996 Patentblatt 1996/32**

(73) Patentinhaber: **SIEMENS AKTIENGESELLSCHAFT**
**80333 München (DE)**

(72) Erfinder:
• **GRIEB, Herbert**
**D-76316 Malsch (DE)**

• **PREUSS, Hans-Peter**
**D-76189 Karlsruhe (DE)**

(56) Entgegenhaltungen:
• **PATENT ABSTRACTS OF JAPAN vol. 14, no. 101 (P-1012) 23. Februar 1990 & JP,A,01 304 501 (FANUC LTD) 8. Dezember 1989**
• **PATENT ABSTRACTS OF JAPAN vol. 9, no. 214 (P-384) 31. August 1985 & JP,A,60 073 701 (KOGYO GIJUTSUIN) 25. April 1985**
• **AUTOMATISIERUNGSTECHNIK - AT., Bd.41, Nr.9, September 1993, MUNCHEN DE Seiten 331 - 339 J. BRAUN UND M. RAU 'Die Modellbildung und Regelung an einem thermischen Mehrschichtenwindkanal'**

**Beschreibung**

Die Erfindung betrifft eine Regeleinrichtung nach dem Oberbegriff des Anspruchs 1.

Aus dem Buch "Regelungstechnik" von Otto Föllinger, 6. Auflage, Hüthig Buchverlag, Heidelberg 1990, sind zur Regelung technischer Prozesse sowohl sogenannte konventionelle Regler als auch Zustandsregler bekannt. Konventionelle Regler, z. B. PI(D)-Regler, sind universell einsetzbar, einfach in der Handhabung und bezüglich ihrer Funktionsweise anschaulich und robust. Sie liefern bei vielen Prozessen zufriedenstellende Ergebnisse, die jedoch gerade bei Prozessen mit hoher Ordnung durchaus verbessert werden können. Zustandsregler hingegen haben den Ruf, mathematisch abstrakt, aufwendig, empfindlich und somit im Einsatz schwer handhabbar zu sein. Sie sind leistungsfähiger als PI(D)-Regler und können insbesondere bei Prozessen hoher Ordnung eine bessere Regelgüte erreichen. Ihr praktischer Einsatz wurde bisher durch den erwarteten hohen Aufwand für den Entwurf und Einsatz des Reglers weitgehend verhindert.

Weitere Schaltungsanordnungen von Zustandsregelkreisen sind aus den japanischen Dokumenten JP-01 304 501 und JP-60 073 701 bekannt.

Der Erfindung liegt die Aufgabe zugrunde, eine Regeleinrichtung zu schaffen, welche die Vorteile eines PI(D)-Reglers mit denen eines Zustandsreglers vereinigt, ohne deren Nachteile aufzuweisen, und die darüber hinaus einfach zu parametrieren ist.

Zur Lösung dieser Aufgabe weist die neue Regeleinrichtung der eingangs genannten Art die im kennzeichnenden Teil des Anspruchs 1 genannten Merkmale auf. In den Unteransprüchen sind vorteilhafte Weiterbildungen der Erfindung angegeben.

Die Erfindung hat den Vorteil, daß die Einstellungen der Regeleinrichtung einfach und anschaulich vorzunehmen sind, da zur Vorgabe der Regeleigenschaften lediglich ein Parameter festgelegt werden muß. Die erforderliche Prozeßkenntnis beschränkt sich auf die Kenngrößen, die gleichermaßen zur Dimensionierung eines konventionellen Reglers benötigt werden. Dazu können die aus der eingangs genannten Literatur bekannten Verfahren zur Prozeßidentifikation eingesetzt werden. Bei einer Realisierung der erfindungsgemäßen Regeleinrichtung als Abtastregelung sind Umfang und Komplexität des Regelalgorithmus nicht wesentlich größer als bei einem konventionellen PID-Regler. Gegenüber diesem weist die erfindungsgemäße Regelung jedoch eine kürzere Einschwingzeit auf, die zudem durch Parametrierung in weiten Bereichen variiert und den Umgebungsbedingungen angepaßt werden kann. Da der unterlagerte Zustandsregler so entworfen wird, daß er PTn-Verhalten aufweist, können zum Entwurf des konventionellen Reglers, z. B. eines PI-Reglers, dieselben Methoden (Einstellregeln für $K_P$ und $T_N$) wie bei konventionellen Regelkreisen zum Einsatz kommen.

Anhand der Zeichnungen, in denen Ausführungsbeispiele der Erfindung dargestellt sind, werden im folgenden die Erfindung sowie Ausgestaltungen und Vorteile näher erläutert.

Es zeigen:

Figur 1      einen geschlossenen Regelkreis mit einer erfindungsgemäßen Regeleinrichtung,

Figur 2      ein Blockschaltbild einer erfindungsgemäßen Regeleinrichtung und

Figur 3      Zeitdiagramme von Sprungantwortsignalen verschiedener Regelkreise.

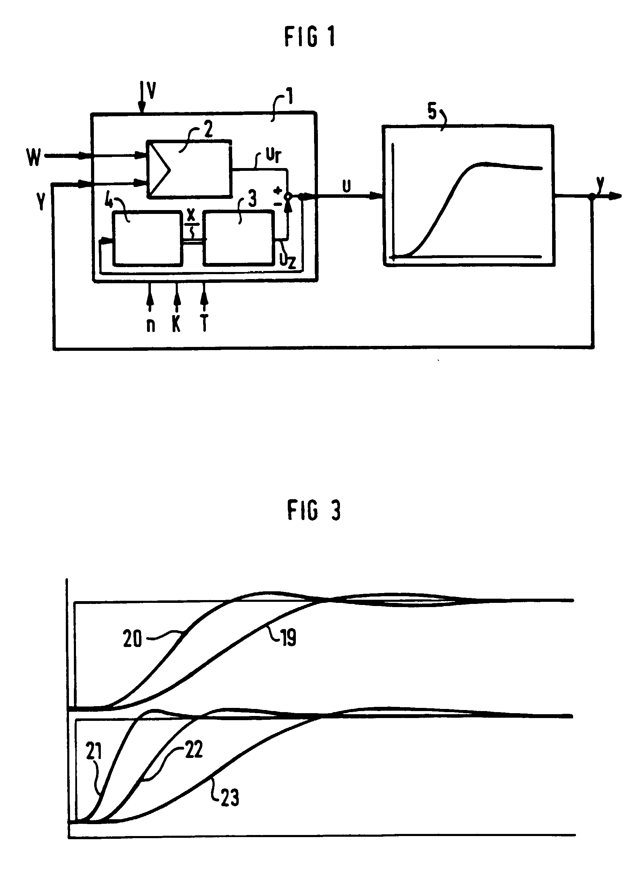

Wie in Figur 1 gezeigt, ist eine erfindungsgemäße Regeleinrichtung 1 in einem einzelnen Modul oder Baustein integrierbar. In diesem Modul sind die Komponenten PI-Regeleinrichtung 2, die eine Vergleichseinrichtung und einen PI-Regler enthält, Zustandsregler 3 und Beobachter 4 eingeschlossen. Die erfindungsgemäße Regeleinrichtung 1 wird wie eine konventionelle PI(D)-Regeleinrichtung im Regelkreis verschaltet, d. h., der Regeleinrichtung 1 werden Führungsgröße w und Regelgröße y zugeführt, aus denen sie eine Stellgröße u zur Beeinflussung einer Strecke 5 erzeugt. An der Strecke 5 wiederum wird die Regelgröße y als Ausgangssignal abgegriffen. Die Stellgröße u wird auch vom Beobachter 4 benötigt, damit dieser daraus Zustandsgrößen $\underline{x}$ ableiten kann. Mit Hilfe dieser Zustandsgrößen $\underline{x}$ ermittelt der Zustandsregler 3 einen Stellgrößenanteil $u_Z$, der einem Stellgrößenanteil $u_r$ der PI-Regeleinrichtung 2 überlagert wird. Die Parametrierung der erfindungsgemäßen Regeleinrichtung 1 erfolgt durch Vorgabe eines Dynamikfaktors V. Der Zustandsregler 3 sowie der Beobachter 4 benötigen weiterhin Prozeßkenngrößen, hier eine Ordnung n, eine Verstärkung K und eine Zeitkonstante T eines PTn-Modells der Strecke 5.

Zum Entwurf einer erfindungsgemäßen Regeleinrichtung wird die komplexe Übertragungsfunktion G(s) der Strecke im sogenannten Laplace- oder Frequenzbereich in entsprechende Zustandsgleichungen überführt. Eine allgemeine Übertragungsfunktion lautet:

$$G(s) = \frac{Y(s)}{U(s)} = \frac{b_n s^n + \ldots + b_1 s + b_0}{a_n s^n + \ldots + a_1 s + a_0}$$

Die zugehörige Zeitbereichsdarstellung erhält man durch Laplace-Rücktransformation als lineare Differentialgleichung n-ter Ordnung zu:

$$a_n y^{(n)} + \ldots + a_1 \dot{y} + a_0 y = b_n u^{(n)} + \ldots + b_1 \dot{u} + b_0 u$$

Diese läßt sich durch Einführung geeigneter Zustandsvariablen $x_1 \ldots x_n$ in ein System von n linearen Differentialgleichungen erster Ordnung und eine Ausgangsgleichung überführen:

$$\underline{\dot{x}} = \underline{A}\,\underline{x} + \underline{b}u, \quad \underline{x}_0 = \underline{x}(t_0),$$

$$y = \underline{c}^T \underline{x} + du$$

Der konkrete Aufbau der Dynamikmatrix $\underline{A}$, des Eingangsvektors b und des Ausgangsvektors $\underline{c}^T$ sowie der Durchgangswert d hängen davon ab, nach welcher Methode die Zustandsgleichungen gewonnen wurden. Der Übergang von der Übertragungsfunktion G(s) zu den Zustandsgleichungen ist also nicht eindeutig.

Demgegenüber gehört zu jeder Zustandsbeschreibung eines Systems natürlich eine eindeutige Übertragungsfunktion:

$$G(s) = \underline{c}^T (s\underline{I} - \underline{A})^{-1} \underline{b} + d$$

Die Zustandsgleichungen werden vorteilhaft für die unterlagerte Zustandsregelung in Regelungsnormalform angegeben:

$$\underline{\dot{x}} = \begin{bmatrix} 0 & 1 & 0 & \ldots & 0 \\ 0 & 0 & 1 & \ldots & 0 \\ \cdot & \cdot & \cdot & \cdots & \cdot \\ \cdot & \cdot & \cdot & \cdots & 1 \\ \dfrac{-a_0}{a_n} & \dfrac{-a_1}{a_n} & \cdot & \cdots & \dfrac{-a_{n-1}}{a_n} \end{bmatrix} \underline{x} + \begin{bmatrix} 0 \\ \cdot \\ \cdot \\ 0 \\ \dfrac{1}{a_n} \end{bmatrix} u$$

$$y = \left[ b_0 - a_0 \frac{b_n}{a_n}, \ldots, b_{n-1} - a_{n-1} \frac{b_n}{a_n} \right] \underline{x} + \frac{b_n}{a_n} u$$

Sie kann fast ohne Rechnung aus den Polynomkoeffizienten der Übertragungsfunktion G(s) aufgestellt werden. Ein Sonderfall der allgemeinen Übertragungsfunktion ist die PTn-Strecke mit der Übertragungsfunktion

$$G(s) = \frac{K}{(1 + Ts)^n}$$

mit

K -  Verstärkungsfaktor,
T -  Zeitkonstante und
n -  Ordnung der Strecke.

Mit Hilfe der binomischen Formeln gewinnt man die Darstellung:

$$G(s) = \frac{K}{T^n s^n + nT^{n-1} s^{n-1} + n(n-1)T^{n-2}/2! s^{n-2} + \ldots + n(n-1)T^2/2! s^2 + nTs + 1} =$$

$$= \frac{K/T^n}{s^n + n/Ts^{n-1} + \ldots + 0.5n(n-1)/T^{n-2} s^2 + n/T^{n-1} s + 1/T^n}$$

$$= \frac{b_0}{s^n + a_{n-1} s^{n-1} + \ldots + a_2 s^2 + a_1 s + a_0}$$

Die Übertragungsfunktion des zustandsgeregelten Systems wird allgemein beschrieben durch die Gleichung:

$$G_r(s) = \frac{b_0}{s^n + (a_{n-1} + r_n)s^{n-1} + \ldots + (a_1 + r_2)s + a_0 + r_1}$$

Der unterlagerte Zustandsregelkreis weist PTn-Verhalten auf mit derselben Ordnung n, wenn sich seine Übertragungsfunktion $G_r(s)$ umwandeln läßt in die Gleichung:

$$G_r(s) = \frac{K_r}{(1 + T_r s)^n}$$

mit

$K_r$ - Verstärkungsfaktor der zustandsgeregelten Strecke,
$T_r$ - Zeitkonstante der zustandsgeregelten Strecke.

Wegen der Unveränderbarkeit des Zählers wird diese Gleichung zur Polynomdarstellung überführt in

$$G_r(s) = \frac{K/T^n}{s^n + n/T_r s^{n-1} + \ldots + 0.5n(n-1)/T_r^{n-2} s^2 + n/T_r^{n-1} s + 1/T_r^n}$$

Die sich einstellende neue Verstärkung berechnet sich dann zu:

$$K_r = K(T_r/T)^n$$

Die Parameter des Zustandsreglers erhält man daraus durch Koeffizientenvergleich zu:

$$r_1 = 1/T_r^n - 1/T^n,$$

$$r_2 = n(1/T_r^{n-1} - 1/T^{n-1}),$$

$$r_3 = 0.5n(n-1)(1/T_r^{n-2} - 1/T^{n-2}),$$

$$\vdots$$

$$\vdots$$

$$r_n = n(1/T_r - 1/T)$$

Definiert man das Verhältnis der Zeitkonstanten als Dynamikfaktor V zu $V = T/T_r$, so gehen die Gleichungen für die Parameter des Zustandsreglers über in:

$$r_1 = \frac{1}{T^n}(V^n - 1),$$

$$r_2 = \frac{n}{T^{n-1}}(V^{n-1} - 1),$$

$$r_3 = \frac{1}{2!}\frac{n(n-1)}{T^{n-2}}(V^{n-2} - 1)$$

$$\vdots$$

$$r_n = \frac{n}{T}(V-1)$$

Wie diese Gleichungen zeigen, hängt die Berechnung der Parameter des Zustandsreglers von den Kenngrößen K, T und n des Prozesses und von dem vorgegebenen Dynamikfaktor V ab. Die Parametrierung des Zustands reglers reduziert sich bei bekannten Streckenkenngrößen auf die Vorgabe des Dynamikfaktors, die somit der einzige nach außen hin relevante Parameter des Zustandsreglers ist. Die Verstärkung $K_r$ des Zustandsregelkreises hat sich im Vergleich zur Verstärkung K der ungeregelten Strecke um den Faktor $1/V^n$ geändert. Der Parameter V bestimmt die Schnelligkeit des unterlagerten Zustandsregelkreises, welcher für beliebige Werte von V PTn-Verhalten aufweist.

Der PI-Regler mit der Übertragungsfunktion

$$R(s) = K_P(1 + \frac{1}{T_N s})$$

wird nach dem Betragsoptimum entworfen. Für den unterlagerten Zustandsregelkreis als Strecke des PI-Reglers erhält man somit:

$$K_P = \frac{n+2}{n-1}\frac{V^n}{4K} \qquad T_N = \frac{n+2}{3}\frac{T}{V}$$

Auch die Parameter des PI-Reglers sind demnach eindeutig durch den Dynamikfaktor V festgelegt, wenn die Streckenkenngrößen K, T und n bekannt sind. Damit ist der Dynamikfaktor V der einzige Parameter, der das Verhalten der Regeleinrichtung bestimmt.

Vorteilhaft kann die Reglerverstärkung Kp des PI-Reglers so modifiziert werden, daß ein Überschwingen der Regelgröße y praktisch vermieden wird:

$$K_P = 0.7\frac{n+2}{n-1}\frac{V^n}{4K}$$

Der Reglerentwurf in dem bisher beschriebenen Ausführungsbeispiel beschränkt sich auf das PTn-Modell und damit auf Strecken mit Ausgleich. Eine Erweiterung des Reglerentwurfs z. B. auf Modelle ohne Ausgleich ist in ähnlicher Weise möglich.

Die Strecke wird dazu als ITn-Modell ($G(s) = K/(s(1+sT)^n)$) angenommen. Der Entwurf des Zustandsreglers erfolgt jetzt aber mit dem Ziel, daß die zustandsgeregelte Strecke ITn-Verhalten aufweist. Dabei soll die Zeitkonstante des Systems, bestehend aus ITn-Strecke und Zustandsregler, kleiner sein als die Zeitkonstante der ungeregelten Strecke. Die Parameter des überlagerten PI-Reglers werden anschließend nach einem speziellen Betragsoptimum für Strecken ohne Ausgleich entsprechend den Kenngrößen des Zustandsregelkreises automatisch berechnet nach den Formeln

$$T_N = T_r(2n + \sqrt{2n(n+1)}),$$

$$K_P = \frac{2}{K_r T_N}$$

mit

$T_r$ -     Zeitkonstante der zustandsgeregelten Strecke,

$K_r$ -     Verstärkung der zustandsgeregelten Strecke.

Eine andere Möglichkeit zum Entwurf einer erfindungsgemäßen Regeleinrichtung ist die Vorgabe der gewünschten 95%-Einschwingzeit $T_{RK}$ des Gesamtregelkreises. Die 95%-Einschwingzeit $T_{RK}$ wird ermittelt zu

$$T_{RK} = \min \{t_{95}\} \text{ mit } |1.0\text{-}h(t)| \leq 0.05 \text{ für alle } t > t_{95},$$

wobei h(t) die Sprungantwort des Systems ist.

Diese Vorgabegröße ist sehr viel anschaulicher als der oben definierte Dynamikfaktor V ohne den Einfluß des PI-Reglers. In Abhängigkeit von der Ordnung n der Strecke kann die Zeitkonstante $T_r$ der unterlagerten Zustandsregelung mit PTn-Verhalten aus der folgenden Tabelle ermittelt werden, die durch Auswertung numerischer Simulationen erhalten wurde:

| n | 1 | 2 | 3 | 4 | 5 | 6 | 7 | 8 | 9 | 10 |
|---|---|---|---|---|---|---|---|---|---|---|
| $T_{RK}/T_r$ | - | 4.1 | 7.65 | 11.2 | 16.8 | 20.1 | 24 | 28 | 32 | 36 |

Durch die so erhaltenen Werte n und $T_r$ ist der Zustandsregler festgelegt.

Bei allgemeineren Strecken, die nicht zwangsweise PTn-Verhalten aufweisen, sondern lediglich vollständig steuerbar sein müssen, ist das Ziel des n-fachen reellen Pols in einem unterlagerten Zustandsregelkreis immer erreichbar. Hier kann in vorteilhafter Weise die 95%-Einschwingzeit $T_Z$ der unterlagerten Zustandsregelung als anschauliche Vorgabegröße zur Kennzeichnung des angestrebten Führungsverhaltens verwendet werden. Mit zunehmender Streckenordnung n stimmt $T_Z$ wegen der abnehmenden Einflußmöglichkeiten des überlagerten PI-Reglers zudem immer besser mit der Einschwingzeit des gesamten PI-Zustandsregelkreises überein. Den Zusammenhang zwischen dem Entwurfsparameter $T_Z$ und den Parametern n und $T_r$ des zu erzielenden PTn-Verhaltens kann man aus der folgenden Tabelle entnehmen:

| n | 1 | 2 | 3 | 4 | 5 | 6 | 7 | 8 | 9 | 10 |
|---|---|---|---|---|---|---|---|---|---|---|
| $T_Z/T_r$ | 3.00 | 4.74 | 6.30 | 7.75 | 9.15 | 10.5 | 11.8 | 13.2 | 14.4 | 15.7 |

Die Gleichungen für einen nach dem bereits erwähnten abgeschwächten Betragsoptimum entworfenen PI-Regler lauten nun:

$$K_P = \frac{0.7(n+2)}{4K(n\text{-}1)},$$

$$T_N = \frac{(n+2)T_r}{3}$$

An Figur 1 wird deutlich, daß man die erfindungsgemäße Regeleinrichtung 1 aus PI-Regeleinrichtung 2, unterlagertem Zustandsregler 3 und Zustandsbeobachter 4 als einen neuen Reglertyp auffassen kann, der an die Stelle eines konventionellen PI(D)-Reglers getreten ist. Selbst die Ein- und Ausgänge sind in beiden Fällen dieselben. Der Unterschied besteht lediglich in den intern realisierten Regelungsverfahren und in der Anzahl und Wirkungsweise der nach außen in Erscheinung tretenden Reglerparameter. Während der konventionelle PID-Regler noch mit drei vergleichsweise unanschaulichen Parametern aufwartet, muß im Falle der leistungsfähigeren erfindungsgemäßen Regeleinrichtung nur noch ein einziger, leicht verständlicher Schnelligkeitsparameter, nämlich der Dynamikfaktor V, die gewünschte Einschwingzeit $T_{RK}$ des Gesamtregelkreises oder die 95%-Einschwingzeit $T_Z$ der unterlagerten Zustandsregelung gewählt werden. Figur 1 macht auch anschaulich klar, daß die bei PI(D)-Reglern bekannten Identifikationsverfahren für Prozesse hier unverändert angewendet werden können. Anders als bei der PI(D)-Regelung, wo die Prozeßidentifikation ausschließlich wegen des Reglerentwurfs benötigt wird, ist sie im unterlagerten Zustandsregelkreis die Voraussetzung sowohl für den Zustandsregler- als auch für den Beobachterentwurf.

Der Beobachter 4 hat die Aufgabe, die Zustandsvariablen x möglichst genau zu rekonstruieren. Da der Entwurf des Zustandsreglers auf einer Beschreibung des Prozesses in Regelungsnormalform basiert, entsprechen die Zustandsvariablen des Beobachters ebenfalls der Regelungsnormalform.

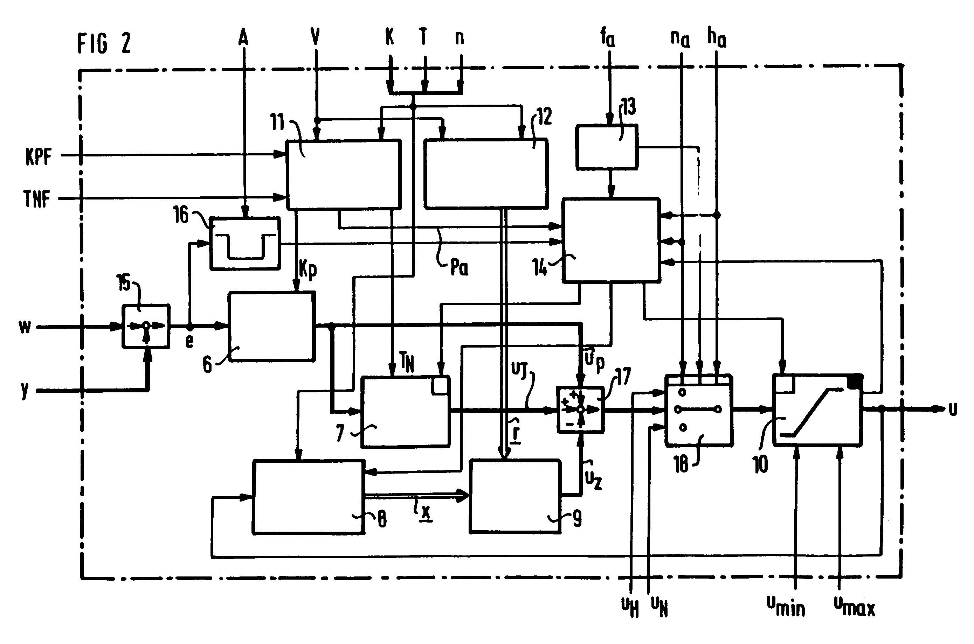

Aus dem Blockschaltbild in Figur 2 ist der detaillierte Aufbau einer erfindungsgemäßen Regeleinrichtung entnehmbar. Sie enthält einen P-Teil 6 und einen I-Teil 7 eines PI-Reglers, einen Beobachter 8, einen Zustandsregler 9, eine Stellgrößenbegrenzung 10, Parameterberechnungseinheiten 11 und 12 zur Berechnung der Parameter des PI-Reglers und der Parameter des Zustandsreglers, eine Anlaufeinheit 13 und eine Nachführeinheit 14. In einem Vergleicher 15 wird aus einem Sollwert w und einer Regelgröße y eine Regeldifferenz e gebildet, die dem P-Teil 6 und einer Ansprechschwelle 16 zugeführt wird. Von dem P-Teil 6 und dem I-Teil 7 berechnete Stellgrößenanteile $u_P$ und $u_I$ werden in einem Summierer 17 addiert und ergeben, vermindert um einen Zustandsanteil $u_Z$, die Gesamtstellgröße u, vorbehaltlich etwaiger Hand- oder Nachführeingriffe und einer Wirksamkeit der Stellgrößenbegrenzung 10. Die Stellgröße u wird intern dem Beobachter 8 aufgeschaltet, der daraus die Zustandsvariablen $\underline{x}$ für den Zustandsregler 9 rekonstruiert. Der Abgriff der Stellgröße u für den Beobachter 8 liegt hinter der Stellgrößenbegrenzung 10 und einem Umschalter 18. Auf diese Weise kann sichergestellt werden, daß die Zustandsvariablen $\underline{x}$ entsprechend der wirkenden Stellgröße u berechnet werden, d. h., daß sie auch bei Hand- und Nachführeingriffen die tatsächlichen Zustände widerspiegeln. Die Ansprechschwelle 16 wirkt in Verbindung mit der Nachführeinheit 14. Die Nachführeinheit 14 greift bei bestimmten Betriebszuständen, wie z. B. Handeingriffen, in die Funktionen des I-Teils 7, des Beobachters 8 und der Stellgrößenbegrenzung 10 ein. Die bisher aufgeführten Funktionen zählen zu den Online-Funktionen der Regeleinrichtung, d. h., sie müssen im laufenden Betrieb ständig bearbeitet werden. Daneben gibt es noch Offline-Funktionen, deren Bearbeitung nur bei Änderung der Einstellung und nach dem Einschalten des Reglers gefordert ist. Dazu zählen die Berechnung der Parameter $K_P$ und $T_N$ für den P-Teil 6 bzw. den I-Teil 7, der Parameter $\underline{r}$ für den Zustandsregler 9 sowie die Anlaufroutine in der Anlaufeinheit 13.

Wenn die Regeleinrichtung in einem Abtastregelkreis eingesetzt wird, können normierte Signale für die Führungsgröße w, die Regelgröße y, eine im Handbetrieb eingestellte Stellgröße $u_H$, eine in einer Betriebsart "Nachführen" vorgegebene Stellgröße $u_N$ sowie eine minimale Stellgröße $u_{min}$ und eine maximale Stellgröße $u_{max}$ für den Stellgrößenbegrenzer 10 verwendet werden. Damit liegt auch die Stellgröße u als normiertes Signal vor. Der Rechenaufwand für eine erfindungsgemäße Regeleinrichtung ist etwa zwei- bis dreimal so groß wie der eines vergleichbaren PID-Reglers. Im einzelnen erhält man für den Vergleicher 15, den P-Teil 6 und den I-Teil 7 die folgenden zeitdiskreten Beziehungen:

$$e = w - y$$

$$u_P = eK_P$$

und mit der Rechteckregel

$$u_I = u_{IAlt} + eK_P \frac{t_A}{T_N},$$

mit $t_A$ = Abtastzeit und $u_{IAlt} = u_I$ vom vorherigen Abtastzyklus.

Die Ansprechschwelle 16 liefert die binäre Information, ob der Betrag der Regeldifferenz e die Schwelle A überschreitet. Ihr Ausgangssignal ist

$$1 \text{ für } |e| \geq A \text{ und } 0 \text{ für } |e| < A$$

Der I-Teil 7 kann durch die Nachführeinheit 14 auf die Betriebsart "Nachführen" umgeschaltet werden. Insgesamt sind sechs Methoden (M1 ... M6) möglich, die betriebszustandsabhängig von der Nachführeinheit 14 ausgewählt werden.

- $M1$: $u_I = u_{max} - u_P + u_Z$
- $M2$: $u_I = u_{min} - u_P + u_Z$
- $M3$: $u_I = u_H + u_Z$
- $M4$: $u_I = u_N + u_Z$
- $M5$: $u_I = u_{Alt} - u_P + u_Z$ mit $u_{Alt} = u$ vom vorherigen Abtastzyklus
- $M6$: $u_I = \frac{y}{K} + u_Z$

Der Beobachter arbeitet nach den Zustandsgleichungen:

$$\dot{x}_1 = x_2/T$$

$$\dot{x}_2 = x_3/T$$

$$.$$

$$.$$

$$.$$

$$\dot{x}_n = -\frac{1}{T}x_1 - \frac{n}{T}x_2 - \ldots - \frac{1}{2!}\frac{n(n-1)}{T}x_{n-1} - \frac{n}{T}x_n + u/T$$

Die Ausgangsgleichung für die Regelgröße y wird nicht berücksichtigt, da nur die Zustandsvariablen $\underline{x}$ interessieren. Die Eingangssignale des Beobachters 8 sind die Stellgrößen u sowie die Kenngrößen des Prozeßmodells K, T und n. Bei dem Ausführungsbeispiel sind die Zustandsgleichungen mit Hilfe der Rechteckregel in eine zeitdiskrete Form überführt. Die Bearbeitung erfolgt, indem die Zustandsvariablen $\underline{x}$ in der Reihenfolge fallender Indizes berechnet werden ($x_n \ldots, x_2, x_1$). Der Beobachter 8 wertet nur die Stellgröße u aus, nicht aber die Regelgröße y. Deshalb ist er nicht in der Lage, bei verschiedenen Anfangszuständen eine Angleichung an die Prozeßzustände durchzuführen. Dies geschieht durch Nachführen des Beobachters 8, wobei

$$x_1 = \frac{y}{K} \text{ und } x_2 = \ldots = x_n = 0$$

gesetzt wird. Der Beobachter 8 wird ebenfalls durch die Nachführeinheit 14 auf die Betriebsart "Nachführen" umgeschaltet; dies ist nur einmalig während des Anlaufs notwendig. Zu beachten ist, daß während des laufenden Betriebs die Regelstrecke nicht von der Regeleinrichtung getrennt werden darf, da sonst die Anfangszustände des Beobachters 8 nicht mehr mit den tatsächlichen Zuständen übereinstimmen würden.

Der Zustandsregler 9 arbeitet nach dem folgenden Algorithmus:

$$u_Z = x_1 r_1 + x_2 r_2 + \ldots + x_n r_n$$

Für diesen Zustandsregler erhält man Parameter $r_1 \ldots r_n$ nach den Formeln:

$$r_1 = (V^n - 1), \qquad r_2 = n(V^{n-1} - 1),$$

$$r_3 = \frac{n(n-1)}{2!}(V^{n-2} - 1) \ldots r_n = n(V - 1)$$

Für einen vorgegebenen Dynamikfaktor V = 1 verschwinden die Parameter $r_1 \ldots r_n$ des Zustandsreglers 9 und somit der Stellgrößenanteil $u_Z$. Damit verhält sich die erfindungsgemäße Regeleinrichtung wie ein konventioneller PI-Regler.

In dem Umschalter 18 werden alternativ eine berechnete Stellgröße, eine Handstellgräße $u_H$ oder eine Nachführstellgräße $u_N$ auf die Stellgrößenbegrenzung 10 durchgeschaltet. Auswahlkriterien sind Eingangssignale $n_a$ und $h_a$ der Regeleinrichtung oder Ansteuersignale von der Anlaufeinheit 13. Die wirksame Stellgröße u ist begrenzt auf einen Bereich zwischen $u_{min}$ und $u_{max}$. Über- oder unterschreitet die Stellgröße u den zulässigen Bereich, wird dies der Nachführeinheit 14 über ein Signal gemeldet, die dann weitere Maßnahmen einleitet. In der Betriebsart "Nachführen" der Stellgrößenbegrenzung 10 als Folge einer Ansteuerung durch die Nachführeinheit 14 sind zwei verschiedene Maßnahmen vorgesehen:

- $M1: u = u_{Alt}$

- $M2: u = \frac{y}{K}$

Die Parameterberechnung unterteilt sich in die Berechnung der Parameter $K_P$ und $T_N$ in der Parameterberechnungseinheit 11 und die Berechnung der Parameter $\underline{r}$ in der Parameterberechnungseinheit 12. In beiden Fällen sind die Ergebnisse abhängig von den Kenngrößen K, T und n des Prozeßmodells. Die Parameter für den P-Teil 6 und den I-Teil 7 werden mit dem Betragsoptimum als Entwurfsverfahren erhalten und können zusätzlich durch Vorgabe von Faktoren KPF bzw. TNF noch beeinflußt werden. Die Faktoren KPF und TNF schaffen die Möglichkeit, die erfindungsgemäße Regeleinrichtung im praktischen Betrieb nachzuoptimieren. Um Stellgrößensprünge aufgrund von Änderungen der Parameter während des Betriebs zu vermeiden, wird die Berechnung von $K_P$ und $T_N$ überwacht. Sobald sich eine Änderung von mehr als einem Prozent ergibt, wird dies durch ein Signal $p_a$ der Nachführeinheit 14 gemeldet, die daraufhin den I-Teil 7 auf die Betriebsart "Nachführen" umschaltet. Durch die Überwachung von $K_P$ und $T_N$ werden vorteilhaft mit minimalem Aufwand Änderungen aller Parameter registriert. Somit ist die erfindungsgemäße Regeleinrichtung auch für nichtlineare und zeitvariante Prozesse geeignet.

Die Funktion der Anlaufeinheit 13 legt das Verhalten der Regeleinrichtung nach dem Einschalten fest. Sie wird nur einmalig sofort nach dem Einschalten ausgeführt. Dabei sind zwei Alternativen vorgesehen:

1. Die Regeleinrichtung nimmt die Betriebsart ein, die durch ihre Parametrierung vorgegeben wurde, z. B. die Betriebsart "Automatik" für $h_a = 0$ und $n_a = 0$, oder

2. die Regeleinrichtung geht in Handbetrieb (Zwangshand). Dieser Handbetrieb kann nur verlassen werden, nachdem manuell auf Handbetrieb ($h_a = 1$) umgeschaltet wurde.

Dazu ist die Anlaufeinheit 13 direkt mit dem Umschalter 18 verbunden. Ein Eingangssignal $f_a$ legt fest, welche der Alternativen zum Tragen kommt ($f_a = 0$ bewirkt Zwangshand).

Die Nachführeinheit 14 leitet aus der Bearbeitung der Anlaufeinheit 13 weitere Maßnahmen ab. Dabei können der I-Teil 7, der Beobachter 8 und die Stellgrößenbegrenzung 10 nachgeführt werden. Die zur Ausführung der einzelnen Maßnahmen erforderlichen Einrichtungen sind Bestandteile der jeweiligen Komponenten.

Die folgende Tabelle zeigt die Betriebszustände (Ursachen), die zu Nachführmaßnahmen führen, sowie ihre Auswirkungen auf die einzelnen Komponenten. Darin sind die unterschiedlichen Nachführmaßnahmen mit M1 ... M6 bezeichnet.

| Ursache | Auswirkung: Nachführen von | | |
|---|---|---|---|
| | I-Teil | Beobachter | Begrenzer |
| Begrenzung $u > u_{max}$ | M1 | nein | nein |
| Begrenzung $u < u_{min}$ | M2 | nein | nein |
| Handbetrieb $h_a = 1$ | M3 | nein | nein |
| Nachführbetrieb $n_a = 1$ | M4 | nein | nein |
| Parameteränderung $p_a = 1$ | M5 | nein | M1 |
| Ansprechschwelle lel > A | M5 | nein | M1 |
| Bausteinanlauf Anlaufroutine aktiv | M6 | ja | M2 |

Beim Beobachter 8 existiert nur eine Maßnahme. Die Nachführmaßnahmen wirken normalerweise, solange die entsprechende Ursache vorhanden ist. Eine Ausnahme bilden die Parameteränderung und der Regleranlauf. In beiden Fällen wird nur für die Dauer eines Abtastzyklus nachgeführt (einmalige Maßnahme).

In Figur 3 ist das Führungsverhalten verschiedener Regler an einer verzögerungsbehafteten Regelstrecke 6-ter Ordnung in Form von Zeitdiagrammen mit der Abszisse als Zeitachse und der Ordinate für die normierte Regelgröße dargestellt. Die Kurven 19 und 20 im oberen Teil wurden mit einem PI- bzw. einem PID-Regler gewonnen, die jeweils nach dem Betragsoptimum entworfen waren. Zur Erzeugung der drei Kurven 21, 22 und 23 wurde dagegen eine erfindungsgemäße Regeleinrichtung verwendet, wobei die Unterschiede aus verschiedenen Reglereinstellungen resultieren. Zwei Punkte sind beim Führungsverhalten besonders auffällig: zum einen kann der Einschwingvorgang mit der erfindungsgemäßen Regeleinrichtung schneller abgeschlossen werden als mit einem konventionellen PI(D)-Regler und zum andern kann bei der erfindungsgemäßen Regeleinrichtung die Einschwingzeit durch Parametrierung in weiten Bereichen variiert werden, so daß sich die Regeleinrichtung insbesondere auch wie ein PI-Regler (Kurve 23) verhält. Vorteilhaft bestimmt ein einziger Parameter der erfindungsgemäßen Regeleinrichtung dabei die Dauer des Ausregelvorgangs. Obwohl in Figur 3 lediglich drei Kurven 21, 22 und 23 gezeigt sind, ist selbstverständlich ein kontinuierlicher Übergang zwischen diesen Stufen und auch über sie hinaus durch die Wahl des Parameters möglich. Im Vergleich zu PI(D)-Reglern kann die Regelgüte wesentlich gesteigert werden. Der Gewinn ist dabei um so größer, je höher die Ordnung des Prozeßmodells ist. Bevorzugte Einsatzgebiete sind daher z. B. die Dampftemperatur-, Dampfdruck-, Enthalpie- oder Höhenstandsregelung. Bei einer Ordnung n≤2 sind PID-Regler und die erfindungsgemäße Regeleinrichtung gleichwertig, da mit einem PID-Regler bereits zwei Zeitkonstanten kompensierbar sind. Jedoch ist bei der erfindungsgemäßen Regeleinrichtung die Einstellung einfacher handhabbar als bei einem PID-Regler.

Die gezeigten Kurven 21, 22 und 23 gehen von idealen Bedingungen aus und demonstrieren, was theoretisch mit einer erfindungsgemäßen Regeleinrichtung erreichbar ist. Unter realen Bedingungen, wenn beispielsweise das Prozeßmodell ungenau ist oder wenn Begrenzungen wirken, kann das reale vom idealen Verhalten durchaus abweichen.

Die bessere Regelgüte erkauft man sich durch stärkere Bewegungen der Stellgröße, die mit steigendem Dynamikfaktor an Heftigkeit zunehmen. Diese Eigenschaft hat für den praktischen Einsatz zur Folge, daß man den Dynamikfaktor nicht beliebig erhöhen kann. Man muß deshalb bei der Wahl des Dynamikfaktors einen Kompromiß schließen zwischen der gewünschten Regelgüte und der tolerierbaren Stellgliedbetätigung.

Die erfindungsgemäße Regeleinrichtung zeigt auch bei Einwirken von Störgrößen auf die Stellgröße u, die Strecke oder die Regelgröße y und bei Änderungen der Streckenkenngrößen ein robustes Verhalten. Das gute Funktionieren unter diesen Bedingungen ist eine wesentliche Stärke der erfindungsgemäßen Regeleinrichtung, die einen praktischen Einsatz überhaupt erst möglich macht, da nur in den seltensten Fällen die tatsächliche Regelstrecke exakt mit dem Modell übereinstimmt, das dem Reglerentwurf zugrunde liegt.

## Patentansprüche

1. Regeleinrichtung für einen vollständig steuerbaren Prozeß (5) mit einem Ausgangssignal (y),

    - mit einer Vergleichseinrichtung (15), in welcher durch einen Vergleich einer Führungsgröße (w) mit dem Ausgangssignal (y) des Prozesses (5) als Regelgröße eine Regeldifferenz (e) gebildet wird,
    - mit einem PI(D)-Regler (6, 7), dem die Regeldifferenz (e) aufgeschaltet ist, und
    - mit einem unterlagerten Zustandsregler (3, 9), der einen Stellgrößenanteil ($u_Z$) liefert, der einem Stellgrößenanteil ($u_r$, $u_p$, $u_l$) des PI(D)-Reglers (6, 7) überlagert wird,

    **dadurch gekennzeichnet,**

    - daß ein unterlagerter Zustandsregelkreis, der aus dem Zustandsregler (3, 9) und dem Prozeß (5) gebildet wird, im Falle eines Prozesses (5) ohne Ausgleich ITn-Verhalten und im Falle eines Prozesses (5) mit Ausgleich PTn-Verhalten aufweist, wobei die Ordnung n des unterlagerten Zustandsregelkreises gleich der Ordnung des Prozesses (5) ist und die Parameter des Zustandsreglers (3, 9) durch die Kenngrößen des Prozesses und einen einzigen vorgegebenen Entwurfsparameter festgelegt sind.

2. Regeleinrichtung nach Anspruch 1, **dadurch gekennzeichnet**, daß der PI(D)-Regler (6, 7) ein nach dem Betragsoptimum entworfener PI-Regler ist.

3. Regeleinrichtung nach Anspruch 2, **dadurch gekennzeichnet**, daß die Reglerverstärkung $K_P$ derart modifiziert ist, daß die Regelgröße (y) nach einem Sprung der Führungsgröße (w) gerade nicht überschwingt.

4. Regeleinrichtung nach einem der vorhergehenden Ansprüche, **dadurch gekennzeichnet**, daß die Zeitkonstante $T_r$ des unterlagerten Zustandsregelkreises als Parameter vorgegeben ist.

5. Regeleinrichtung nach einem der Ansprüche 1 bis 3, **dadurch gekennzeichnet**, daß das Verhältnis einer Zeitkonstante T des Prozesses (5) zur Zeitkonstante $T_r$ des unterlagerten Zustandsregelkreises als Parameter (V) vorgegeben ist.

6. Regeleinrichtung nach einem der Ansprüche 1 bis 3, **dadurch gekennzeichnet**, daß bei vorgegebener 95%-Einschwingzeit $T_Z$ und PTn-Verhalten des unterlagerten Zustandsregelkreises die Ordnung n gleich der Ordnung eines geeigneten Prozeßmodells und die Zeitkonstante $T_r$ des unterlagerten Zustandsregelkreises nach der Tabelle

| n | 1 | 2 | 3 | 4 | 5 | 6 | 7 | 8 | 9 | 10 |
|---|---|---|---|---|---|---|---|---|---|---|
| $T_Z/T_r$ | 3.00 | 4.74 | 6.30 | 7.75 | 9.15 | 10.5 | 11.8 | 13.2 | 14.4 | 15.7 |

gesetzt sind.

**7.** Regeleinrichtung nach einem der Ansprüche 1 bis 3, **dadurch gekennzeichnet**, daß bei vorgegebener 95%-Einschwingzeit $T_{RZ}$ des Regelkreises die Ordnung n gleich der Ordnung des PTn-Prozeßmodells und die Zeitkonstante $T_r$ des unterlagerten Zustandsregelkreises nach der Tabelle

| n | 1 | 2 | -3 | 4 | 5 | 6 | 7 | 8 | 9 | 10 |
|---|---|---|---|---|---|---|---|---|---|---|
| $T_{RK}/T_r$ | - | 4.1 | 7.65 | 11.2 | 16.8 | 20.1 | 24 | 28 | 32 | 36 |

gesetzt sind.

**8.** Regeleinrichtung nach einem der vorhergehenden Ansprüche, **dadurch gekennzeichnet,**

- daß der Prozeß (5) PTn-Verhalten aufweist und
- daß der Zustandsregler (3, 9) in der Regelungsnormalform festgelegt ist durch

$$r_1 = 1/T_r^n - 1/T^n,$$

$$r_2 = n(1/T_r^{n-1} - 1/T^{n-1}),$$

$$r_3 = 0.5n(n-1)(1/T_r^{n-2} - 1/T^{n-2}),$$

$$\vdots$$

$$\vdots$$

$$r_n = n(1/T_r - 1/T),$$

wobei

| | |
|---|---|
| $r_1 \dots r_n$ - | Parameter des Zustandsreglers (3, 9), |
| n - | die Ordnung des Prozesses (5), |
| $T_r$ - | die Zeitkonstante des Zustandsregelkreises und |
| T - | die Zeitkonstante des Prozesses (5) |

sind.

**9.** Regeleinrichtung nach einem der vorhergehenden Ansprüche, **dadurch gekennzeichnet**, daß ein Beobachter (4, 8) vorhanden ist, auf den die Stellgröße (u) geführt ist und der für den unterlagerten Zustandsregler (3, 9) Schätzwerte der Zustandsgrößen ($\underline{x}$) liefert.

**10.** Regeleinrichtung nach Anspruch 9, **dadurch gekennzeichnet**, daß eine Nachführeinheit (14) vorhanden ist, welche bei Überschreiten einer vorgegebenen Schwelle für eine Änderung mindestens eines Reglerparameters, der Regeldifferenz (e), der Stellgröße (u), während des Regleranlaufs oder bei manuell eingestelltem Nachführ- oder Handbetrieb den PI(D)-Regler (6, 7) auf eine Betriebsart "Nachführen" umschaltet und Nachführmaßnahmen betriebszustandsabhängig steuert.

## Claims

**1.** Control system for a completely controllable process (5) with an output signal (y),

- with a comparator (15) in which a control difference (e) is formed by comparison of a guide variable (w) with the output signal (y) of the process (5) as controlled variable,
- with a PI(D) controller (6, 7) to which the control difference (e) is applied, and
- with a secondary status controller (3, 9) which delivers a manipulated variable content ($u_z$) which is superimposed on a manipulated variable content ($u_r$, $u_p$, $u_l$) of the PI(D) controller (6, 7),

characterized in

- that a secondary status control circuit which is formed from the status controller (3, 9) and the process (5) has ITn behaviour in the case of a process (5) without compensation and PTn behaviour in the case of a process (5) with compensation, the order n of the secondary status control circuit being identical to the order of the process (5) and the parameters of the status controller (3, 9) being determined by the characteristic values of the process and a single predetermined design parameter.

2. Control system according to claim 1, characterized in that the PI(D) controller (6, 7) is a PI controller designed according to the optimum value.

3. Control system according to claim 2, characterized in that the controller amplification $K_p$ is modified in such a way that the controlled variable (y) does not overshoot the guide variable (w) after a step.

4. Control system according to one of the preceding claims, characterized in that the time constant $T_r$ of the secondary status control circuit is predetermined as a parameter.

5. Control system according to one of claims 1 to 3, characterized in that the ratio of a time constant T of the process (5) to the time constant $T_r$ of the secondary status control circuit is predetermined as a parameter (V).

6. Control system according to one of claims 1 to 3, characterized in that with a predetermined 95% settling time $T_z$ and PTn behaviour of the secondary status control circuit, the order n is set equal to the order of a suitable process nodel and the time constant $T_r$ of the secondary status control circuit according to the Table

| n | 1 | 2 | 3 | 4 | 5 | 6 | 7 | 8 | 9 | 10 |
|---|---|---|---|---|---|---|---|---|---|---|
| $T_z/T_r$ | 3.00 | 4.74 | 6.30 | 7.75 | 9.15 | 10.5 | 11.8 | 13.2 | 14.4 | 15.7 |

7. Control system according to one of claims 1 to 3, characterized in that, with predetermined 95% settling time $T_{RZ}$ of the control circuit, the order n is set equal to the order of the PTn process model and the time constant $T_r$ of the secondary status control circuit according to the Table

| n | 1 | 2 | 3 | 4 | 5 | 6 | 7 | 8 | 9 | 10 |
|---|---|---|---|---|---|---|---|---|---|---|
| $T_{RK}/T_r$ | - | 4.1 | 7.65 | 11.2 | 16.8 | 20.1 | 24 | 28 | 32 | 36 |

8. Control system according to one of the preceding claims, characterized in that the process (5) has PTn behaviour and in that the status controller (3, 9) is determined in the control normal form by

$$r_1 = 1/\,T_r^n\,-1/T^n,$$

$$r_2 = n(1/\,T_r^{n-1}\,-\,1/T^{n-1}),$$

$$r_3 = 0.5\,n(n-1)(1/\,T_r^{n-2}\,-1/T^{n-2}),$$

$$:$$

$$:$$

$$r_n = n(1/\,T_r\,-1/T)$$

wherein

$r_1 \dots r_n$      are parameters of the status controller (3, 9),
n -      the order of the process (5),

$T_r$ - the time constant of the status control circuit and
$T$ - the time constant of the process (5).

9. Control system according to one of the preceding claims, characterized in that an observer (4, 8) is provided on which the manipulated variable (u) is guided and which delivers estimated values of the status variables ($\underline{x}$) for the secondary status controller (3, 9).

10. Control system according to claim 9, characterized in that a follow-up unit (14) is provided which, when a predetermined threshold for a change of at least one controller parameter, the control difference (e), the manipulated variable (u) is exceeded during start-up of the controller or, with manually adjusted follow-up or manual node, switches over the PI(D) controller (6, 7) to a "follow-up" mode and controls follow-up procedures as a function of the operating state.

**Revendications**

1. Dispositif de régulation pour un processus (5), pouvant être complètement commandé, par un signal de sortie (y),

   - comportant un dispositif de comparaison (15) dans lequel, en comparant une grandeur de commande (w) et la grandeur de sortie (y) du processus (5), une différence de réglage (e) est formée comme grandeur réglée,
   - comportant un régulateur PI(D) (6, 7) auquel la différence de réglage (e) est appliquée, et
   - comportant un régulateur d'état (3, 9) subordonné qui fournit une composante de grandeur réglante ($u_z$) qui est superposée à une composante de grandeur réglante ($u_r$, $u_p$, $u_l$) du régulateur PI(D) (6, 7),

   caractérisé par le fait que

   - un circuit de régulation d'état subordonné, qui est formé du régulateur d'état (3, 9) et du processus (5), présente dans le cas d'un processus (5) sans compensation un comportement ITn et dans le cas d'un processus (5) avec compensation un comportement PTn, l'ordre n du circuit de régulation d'état subordonné étant égal à l'ordre du processus (5) et les paramètres du régulateur d'état (3, 9) étant fixés par les grandeurs caractéristiques du processus et par un seul paramètre de conception prescrit.

2. Dispositif de régulation selon la revendication 1, caractérisé par le fait que le régulateur PI(D) (6, 7) est un régulateur PI conçu selon l'optimum en valeur absolue.

3. Dispositif de régulation selon la revendication 2, caractérisé par le fait que l'amplification de régulateur $K_P$ est modifiée de telle sorte que la grandeur réglée (y) n'a pas de suroscillation après un saut de la grandeur de commande (w).

4. Dispositif de régulation selon l'une des revendications précédentes, caractérisé par le fait que la constante de temps $T_r$ du circuit de régulation d'état subordonné est prescrite comme paramètre.

5. Dispositif de régulation selon l'une des revendications 1 à 3, caractérisé par le fait que le rapport d'une constante de temps T du processus (5) à la constante de temps $T_r$ du circuit de régulation d'état subordonné est prescrit comme paramètre (V).

6. Dispositif de régulation selon l'une des revendications 1 à 3, caractérisé par le fait que, pour un temps de régime transitoire $T_z$ prescrit de 95 % et pour un comportement PTn du circuit de régulation d'état subordonné, l'ordre n égal à l'ordre d'un modèle de processus approprié et la constante de temps $T_r$ du circuit de régulation d'état subordonné sont fixés selon le tableau suivant :

| n | 1 | 2 | 3 | 4 | 5 | 6 | 7 | 8 | 9 | 10 |
|---|---|---|---|---|---|---|---|---|---|----|
| $T_z/T_r$ | 3,00 | 4,74 | 6,30 | 7,75 | 9,15 | 10,5 | 11,8 | 13,2 | 14,4 | 15,7 |

7. Dispositif de régulation selon l'une des revendications 1 à 3, caractérisé par le fait que, pour un temps de régime transitoire $T_{RZ}$ prescrit de 95 % du circuit de régulation, l'ordre n égal à l'ordre du modèle de processus PTn et la constante de temps $T_r$ du circuit de régulation d'état subordonné sont fixés selon le tableau suivant :

| n | 1 | 2 | 3 | 4 | 5 | 6 | 7 | 8 | 9 | 10 |
|---|---|---|---|---|---|---|---|---|---|---|
| $T_{RK}/T_r$ | - | 4,1 | 7,65 | 11,2 | 16,8 | 20,1 | 24 | 28 | 32 | 36 |

8. Dispositif de régulation selon l'une des revendications précédentes, caractérisé par le fait que

   - le processus (5) présente un comportement PTn et
   - le régulateur d'état (3, 9) dans la forme canonique de régulation est donné par :

$$r_1 = 1/ - 1/T^n,$$

$$r_2 = n(1/ - 1/T^{n-1}),$$

$$r_3 = 0.5\, n\, (n-1)\, (1/ - 1/T^{n-2}),$$

$$\vdots$$

$$\vdots$$

$$r_n = n\, (1/T_r - 1/T),$$

avec

$r_1$ à $r_n$ =      paramètres du régulateur d'état (3, 9),
$n$ =      ordre du processus (5),
$T_r$ =      constante de temps du circuit de régulation d'état,
$T$ =      constante de temps du processus (5).

9. Dispositif de régulation selon l'une des revendications précédentes, caractérisé par le fait qu'il est prévu un observateur (4, 8) auquel la grandeur réglante (u) est envoyée et qui fournit des valeurs estimées des grandeurs d'état ($\underline{x}$) pour le régulateur d'état (3, 9) subordonné.

10. Dispositif de régulation selon la revendication 9, caractérisé par le fait qu'il est prévu une unité de poursuite (14) qui, lors d'un dépassement d'un seuil prescrit pour une variation d'au moins un paramètre de régulateur, de la différence de réglage (e), de la grandeur réglante (u), commute pendant le démarrage du régulateur ou lors d'une exploitation de poursuite réglée à la main le régulateur PI(D) (6, 7) sur un mode d'exploitation "poursuite" et commande des mesures de poursuite en fonction de l'état d'exploitation.

## FIG 1

## FIG 3

FIG 2

EP 0 724 748 B1